# EUROPÄISCHE PATENTANMELDUNG

(11) **EP 1 418 475 A1**
(43) Veröffentlichungstag der Anmeldung: **12.05.2004**
(21) Anmeldenummer: 02405949.5
(22) Anmeldetag: 05.11.2002
(51) Int. Cl.: G04C 3/00, H02K 1/22, H02K 5/04

(54) **Elektromagnetischer Mikromotor**

(71) Anmelder: Sarnatech Rolla AG, 2540 Grenchen (CH)
(72) Erfinder: Sager, Adrian, 5724 Dürrenäsch (CH)
(74) Vertreter: Roshardt, Werner Alfred, Dipl.-Phys.

(57) **Zusammenfassung**

Der elektromagnetischer Mikromotor hat einen Rotor (21). Der Rotor (21) hat ein zwei miteinander fluchtende Wellenstummel (27a, 27b) aufweisendes Rotorgehäuse (**23**) und einen vom Rotorgehäuse (**3; 23**) grösstenteils umgebenen Dauermagneten (**25**). Das Rotorgehäuse (**25**) hat einen zwischen den Wellenstummeln (**27a, 27b**) liegenden freien Innenraum (29), in den der Dauermagnet (25) nach einer Herstellung des Rotorgehäuses (23) einbringbar ist, wobei jede Oberseite (32) des Dauermagneten (**25**) von jeweils einer Innenwandseite (**34**) des Innenraums (**29**) wenigstens grösstenteils bedeckt sind.

Es wird hierdurch ein elektromagnetischer Mikromotor bzw. ein für diesen zu verwendender Rotor geschaffen, wobei der Rotor preisgünstig herstellbar ist, und der Magnet eine grosse magnetische Kraft besitzt.

## Beschreibung

### Technisches Gebiet

Die Erfindung betrifft einen elektromagnetischen Mikromotor gemäss dem Oberbegriff des Patentanspruchs 1 sowie einen Rotor für einen Mikromotor gemäss dem Oberbegriff des Patentanspruchs 2.

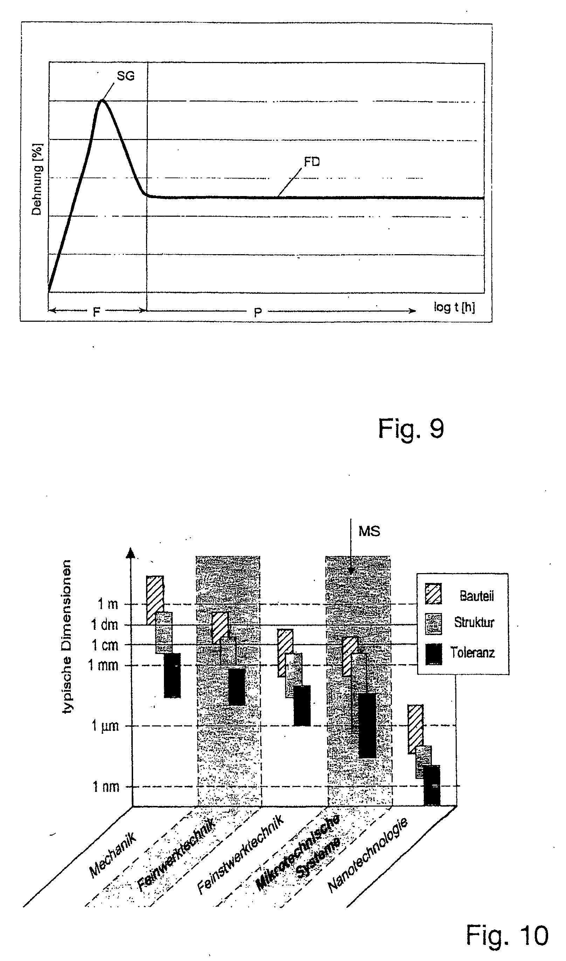

Unter dem Begriff mikrosystemtechnische Systeme werden Bauteile mit Abmessungen, Strukturen und Toleranzen gemäss einer in Figur 10 der Zühlke Engineering AG gezeigten schematischen Grössenordnungsdarstellung in Vergleich zu anderen, kleineren und grösseren mechanischen Grössenordnungssystemen verstanden. Das hier in Betracht kommende mikrotechnische System ist mit einem Pfeil **MS** gekennzeichnet.

Unter Mikrotechnik werden somit Bauteile im Bereich von Submillimetern bis einigen Zentimetern, mit Strukturen von einigen Millimetern bis hinunter zu Submikrometern und Toleranzen im Submikrometerbereich bis in den Submillimeterbereich verstanden.

Die Eigenschaften und Produktionsverfahren der in **Figur 10** angeführten fünf Systeme unterschiedlicher Grössenordnungen lassen sich in der Regel nicht untereinander übertragen.

### Stand der Technik

In der japanischen Patentanmeldung JP-A 56-101366 ist ein Rotor in Mikrosystemtechnik beschrieben. Der Rotor hatte ein Gehäuse mit einem kreiszylindrischen, einen offenen Innenhohlraum aufweisenden Mittelteil und eine durchgehende Achse. Die eine Stirnseite des kreisszylindrischen Teils war zum Innenhohlraum offen, um einen gesinterten, eine zentrische Durchgangsbohrung aufweisenden Dauermagneten aufstecken zu können.

In der Patentanmeldung JP-A 58-95967 ist ebenfalls ein Rotor in Mikrosystemtechnik beschrieben, wobei der Rotor in einem Zweikomponenten-Spritzgiessverfahren ("magnetisches" Material + Kunststoff) hergestellt wurde. Das Gehäuse mit den Stummelachsen wurde in einem weiteren Spritzverfahren um den Magneten herum gespritzt. Bei diesen Verfahren mussten die magnetischen Anteile des Kunststoffes noch in der Schmelze magnetisch ausgerichtet werden. Der Rotor hatte ein angespritztes, im Wesentlichen einen vierseitigen Rechteckrahmen bildendes Gehäuse mit den zentrischen Stummelachsen. Der im Zweikomponenten-Spritzgiessverfahren hergestellte Dauermagnet war scheibenförmig mit einer formschlüssigen Kraftübertragung auf das Gehäuse.
Im US-Patent US-A 5,206,554 ist ebenfalls ein Mikromotor beschrieben. Der Rotor hatte hier einen Dauermagneten, der bis auf mehrere kleine Ausschnitte vollständig mit Kunststoff umgossen war. Die Ausschnitte waren für den Umspritzungsvorgang notwendig.

### Darstellung der Erfindung

### Aufgabe der Erfindung

Aufgabe der Erfindung ist es, einen elektromagnetischen Mikromotor bzw. einen für diesen zu verwendenden Rotor zu schaffen, wobei der Rotor preisgünstig herstellbar ist und der Dauermagnet eine grosse magnetische Kraft besitzt.

### Lösung der Aufgabe

Die Aufgabe wird dadurch gelöst, dass der erfindungsgemässe Mikromotor bzw. dessen Rotor ein Rotorgehäuse mit zwei miteinander fluchtenden Wellenstummel hat und das Rotorgehäuse einen zwischen den Wellenstummeln liegenden freien Innenraum hat, in den der Dauermagnet nach der Herstellung des Rotorgehäuses einbringbar ist, wobei jede Oberseite des Dauermagneten von jeweils einer Innenwandseite des Innenraums wenigstens grösstenteils bedeckt ist.

Unter jeder Oberseite des Dauermagneten wird jede einzelne Seite des Dauermagneten verstanden. Beispielsweise ist dies bei einer kreiszylindrischen Kontur des Dauermagneten dessen untere Bodenseite, dessen obere, in der Regel hierzu parallel verlaufende Oberseite sowie dessen Mantelfläche. Werden andere Konturen verwendet, sind es die entsprechenden Seitenflächen (z.B. vieleckiger Zylinder; Kegelstumpf, ...). Jede einzelne dieser Seiten soll gemäss Patentanspruch 1 bzw. 2 wenigstens zum grössten Teil von einer entsprechenden Innenseite des den Dauermagneten aufnehmenden Innenraums bedeckt sein. Unter dem Ausdruck "wenigstens grösstenteils" können nun einige Seiten des Dauermagneten vollständig von den betreffenden Innenseiten des Innenraums bedeckt bzw. überdeckt sein und z.B. eine einzige Seite oder auch mehrere nur teilweise, wobei die teilweise Überdeckung, da sie zum grössten Teil erfolgen soll, mehr als 50% betragen soll. Es kann somit,wie unten beschrieben, die Mantelfläche des Dauermagneten zu mehr als 50% von einer entsprechenden Fläche des Innenraums überdeckt sein, wobei alle anderen Seiten vollständig bedeckt bzw. überdeckt sind. In diesem Fall kann von einer teilweisen Umhüllung gesprochen werden. Eine derartige Überdeckung kann bei jeder der anderen Seiten vorhanden sein.

In der JP-A 58-95967 hatte man einen preisgünstigen Rotor hergestellt, indem der Magnet sowie das ihn wenigstens teilweise umgebende Rotorgehäuse im Kunststoffspritzgiessverfahren hergestellt wurden. Im Zweikomponenten-Spritzgiessverfahren hergestellte Dauermagnete haben jedoch eine verhältnismässig geringe magnetische Kraft. Eine bedeutend grössere magnetische Kraft weisen Dauermagnete auf, welche mit anderen Verfahren, wie beispielsweise durch Sintern, hergestellt sind.

Aus diesem Grund verwendete nämlich die JP-A 56-101366 einen mit einer zentrischen Durchgangsbohrung versehenen gesinterten Dauermagneten. Durch die Durchgangsbohruhg verlief dann die Rotorachse. Der Dauermagnet wurde in das Rotorgehäuse eingeklebt.

Das Problem mit den schwachen Dauermagneten hatte auch die US-A 5,206,554 erkannt. Sie verwendete deshalb einen gesinterten Dauermagneten, der mit Kunststoff umgossen (umspritzt) wurde. Damit das Umgiessen einigermassen funktionierte, benötigte das Rotorgehäuse kleine Durchgangsöffnungen hin zur Oberfläche des Magneten. Im Gegensatz zur Erfindung wurde hier nicht der Dauermagnet in ein bereits fertig hergestelltes Rotorgehäuse eingebracht.

Wie aus der oben bereits erwähnten Figur 10 ersichtlich ist, besitzen Rotore von Mikromotoren typische Abmessungen von einigen Millimetern. Der Rotor der US-A 5,206,554 hat beispielsweise einen Durchmesser von 1,4 mm und derjenige der Erfindung typischerweise von 1,6 mm. Es handelt sich also um sehr kleine Teile, welche in einer Spritzgussmaschine zum Umspritzen, wie in der US-A 5,206,554 beschrieben, nur mit grossem Aufwand zu handhaben sind.

Wird nun der Rotor bestehend aus einem separaten Rotorgehäuse und einem separaten Dauermagneten hergestellt, so können die optimalen Herstellungsverfahren für das Rotorgehäuse als auch optimale Bedingungen für den Dauermagneten erreicht werden. Der Dauermagnet ist dann nur noch in den freien Innenraum des Rotorgehäuses einzubringen.

Dadurch, dass die Oberflächenbereiche aller Seiten des Dauermagneten von der Innenwand des Innenraums grösstenteils bedeckt sind, ist eine gute Drehmomentübertragung vom Dauermagneten auf das Rotorgehäuse und damit auch auf die Wellenstummel gegeben, wobei einer der Wellenstummel oder beide ein Drehmomentübertragungsmittel, wie beispielsweise ein Zahnrad oder ein Reibrad tragen können.

Vorzugsweise wird man den Dauermagneten als massives Teil, d.h. ohne Durchgangsbohrung ausbilden. Die Herstellungskosten sind hierdurch bedeutend geringer, da er als massive Scheibe (oder auch vieleckige Platte) hergestellt werden kann. Den Dauermagneten wird man insbesondere durch Sintern herstellen, da diese Dauermagnete im Augenblick die grösste magnetische Kraft aufweisen. Selbstverständlich können auch Magnete verwendet werden, welche mit einem anderen Verfahren hergestellt werden. Obwohl die Herstellung eines Dauermagneten mit einer zentrischen Durchgangsbohrung teurer ist als ohne, könnten auch Dauermagneten mit zentrischer Bohrung (oder Eindellung bzw. Ausnehmung) verwendet werden. In diesem Fall könnten die Wellenstummel eine kleine Fortsetzung in den Innenraum erfahren, um ein "Einschnappen" des in den Innenraum einzuschiebenden Dauermagneten und damit eine gute formschlüssige Halterung mit dem Gehäuse zu erreichen.

In einer bevorzugten Ausführung hat das Rotorgehäuse eine Einschieböffnung, durch die der Dauermagnet in den Innenraum einschiebbar ist. Unter einer Einschieböffnung wird eine Öffnung verstanden, durch die der Dauermagnet in das Gehäuse einschiebbar ist. Die Öffnung des nach oben offenen Rotorgehäuses der JP 56-101 366 kann nicht als Einschieböffnung bezeichnet werden, sondern ist als Einlegöffnung zu bezeihnen; sie gibt nämlich den Innenraum vollständig frei, damit der Dauermagnet eingelegt ("eingeworfen") werden kann. Eine Einschieböffnung unterscheidet sich von einer Einlegöffnung dadurch, dass im Wesentlichen sämtliche Wandbereiche des eingeschobenen Dauermagneten zum grösseren Teil bedeckt werden. D.h. erfolgt ein seitliches Einschieben des Dauermagneten, so ist im eingeschobenen Zustand der Mantel des Dauermagneten vom Innenraum zum grössten Teil bedeckt; die Einschieböffnung muss also leicht gedehnt werden. Erfolgt ein Einschieben beispielsweise durch eine Öffnung in einer der Stirnseiten des Rotorgehäuses, so erfolgt auch hier eine Dehnung des Wandbereichs benachbart zur Öffnung.

Der in das Rotorgehäuse eingeschobene Dauermagnet muss auf dieses das für den Antrieb notwendige Drehmoment übertragen können. Hierzu kann eine Klebverbindung, ein Kraftschluss durch ein elastisches Anpressen oder ein Formschluss zwischen Rotorgehäuse und Dauermagneten vorgenommen werden. Eine Verbindung zwischen dem Dauermagneten und dem Rotorgehäuse kann auch durch Schweissen (Ultraschallschweissen, Laserschweissen, Punktschweissen) erfolgen.

Das Rotorgehäuse ist ein Element, welches sich um eine Achse zu drehen hat. Es wird deshalb vorzugsweise einen kreisförmigen Umfang aufweisen. Die die Achsstummel tragenden Flächen können hingegen nahezu beliebig ausgebildet sein. Vorzugsweise wird man sie aber der Einfachheit halber mit zueinander parallelen, senkrecht zur Drehachse verlaufenden kreisförmigen Stirnflächen ausbilden.

Wird der Dauermagnet im Innenraum des Rotorgehäuses festgeklebt, sind an die Einschieböffnung keine allzu grossen Anforderungen zu stellen; der Querschnitt muss lediglich derart gewählt sein, dass der Dauermagnet durchschiebbar ist.

Soll der Dauermagnet jedoch kraft- bzw. formschlüssig gehalten werden, so muss er mit einer elastischen Presskraft im Innenraum gehalten werden. Man kann hierbei einen Presssitz oder einen Presssitz mit einer Schnappverbindung wählen. Eine Schnappverbindung ohne Presssitz benötigt eine Klebung, damit eine Drehmomentübertragung vom Dauermagneten auf das Rotorgehäuse möglich ist. Die Schnappverbindung dient als zusätzliche Sicherung, damit der Dauermagnet bei eventuellen Schlägen und Stössen nicht aus dem Rotorgehäuse herausfällt.

Die Haltekraft bei einem Presssitz muss nun derart gewählt werden, dass die Fliessgrenzdehnung des verwendeten Rotorgehäusematerials nicht überschritten wird. Um den Dauermagneten gut eingeklemmt im Innenraum zu halten, sollte die Oberfläche des Dauermagneten möglichst vollständig bis auf die Einschieböffnung umschlossen sein. D.h. die Einschieböffnung soll so schmal wie möglich ausgebildet sein. Bei dem die Einschieböffnung umgebenden Material kann nun, da das Einschieben nur kurzzeitig erfolgt, die Fliessgrenze überschritten werden; die Streckgrenze des Materials darf aber nicht überschritten werden. Bei der Berechnung der zulässigen Spannungen und Dehnungen am Rotorgehäuse muss daher zwischen dem Fügevorgang (Einschieben des Dauermagneten) und dem Pressvorgang (langzeitiges Halten) unterschieden werden.

Den Zusammenhang zwischen Streck- und Fliessgrenze, Fügen (Bereich F) und Presssitz (Bereich P) zeigt Figur 9. Das Fügen (Einschieben) ist ein kurzzeitiger Vorgang. Dabei darf weder die Streckgenze SG noch die kritische Dehnung, die etwa der doppelten Fliessgrenzdehnung FG entspricht, überschritten werden. Dies würde sonst zu einer irreversiblen Verformung infolge mechanischer Schädigung des Materials (Kunststoff) führen.

Der Pressvorgang ist ein langzeitiger Vorgang, t > 1 h (länger als mindestens eine Stunde). Hierbei ist darauf zu achten, dass die Fliessgrenzdehnung nicht überschritten wird, da sonst eine mechanische Schädigung, meistens infolge von Mikrorissen, den sogenannten Crazes, im Verlauf der Zeit entstehen kann.

Um eine gute Halterung des Dauermagneten im Innenraum des Rotorgehäuses zu erreichen, muss die Einschieböffnung schmal ausgebildet werden. Eine schmale Einschieböffnung bedingt jedoch eine starke Materialdehnung an den Öffnungsrändern; also zwei Bedingungen, welche sich ausschliessen. Um dennoch eine möglichst schmale Einschieböffnung zu erhalten, weist das Rotorgehäuse wenigstens eine Ausgleichsöffnung benachbart zur Einschieböffnung auf. Durch diese wenigstens eine Ausgleichsöffnung ergibt sich eine Vergrösserung der Materialdehnungslänge; die Streckgrenze würde in diesem Fall erst bei einer grösseren Dehnung erreicht werden. Wird nur eine einzige Ausgleichsöffnung verwendet, erfolgt eine asymmetische Dehnung (Aufweitung) der Einschieböffnung. Werden mehrere Ausgleichsöffnungen verwendet, so kann man sich einer gleichmässigen Aufweitung immer mehr annähern.

Wird der Dauermagnet im Innenraum eingeklebt oder eingeschweisst, kann der Innenraum grösser, gleich oder kleiner als die Aussenabmessung des Dauermagneten sein. Soll eine Halterung ohne Klebemittel vorgenommen werden, müssen die Dimensionen des Innenraumes kleiner sein als die Aussenabmessungen des Dauermagneten; die Bedingungen für die Fliessgrenze sind hierbei zu beachten.

Um das Drehmoment vom Rotorgehäuse auf andere Elemente (Getriebe) zu übertragen, kann an einem oder an beiden Wellenstummel ein Zahnrad angeordnet sein. Anstelle eines Zahnrads können jedoch auch andere Übertragungsmittel, wie Reibrad, Riemenscheibe, ... verwendet werden.

Der Rotor des Mikromotor ist ein winziges Bauteil im Millimeterbereich. Dieser Rotor muss gehandhabt werden. Um dessen Handhabung zu erleichtern, sollten wenigstens einige Aussenbereiche eine erhöhte Reibung aufweisen, d.h. eine gute Griffigkeit haben. Für eine gute Griffigkeit kann nun beispielsweise der Rotormantel aufgeraut oder mit einer Riffelung versehen werden. Gegenüber einem Aufrauen hat die Riffelung den Vorteil, dass sie mit genau bestimmbaren Eigenschaften bereits beim Spritzgussverfahren erzeugbar ist.

Das Einbringen des Dauermagneten in das Gehäuse wird bevorzugt automatisch mit beispielsweise einem Roboter vorgenommen. Dieser Vorgang muss aber kontrolliert werden. Es hat sich nun gezeigt, dass ein Rotorgehäuse, hergestellt in der ursprünglichen Kunststofffarbe, welche in der Regel ein milchiges Weiss ist, nach etwa einer Stunde Beobachtungszeit von Beobachter nur noch schwer erkennbar ist. Um die Sichtbarkeit auch über einen langen Zeitraum zu gewährleisten, wird man deshalb das Rotorgehäuse entsprechend einfärben.

Das Material des Rotorgehäuses darf das Magnetfeld des Dauermagneten nicht abschirmen. Es könnte somit auch aus Nichteisenmetallen (z.B. Aluminium) bestehen. Es könnte dann jedoch nur ein Einkleben des Dauermagneten in den Innenraum vorgenommen werden; ein "einschnappendes" Einschieben wäre nicht möglich. Vorzugsweise wird man deshalb des Rotorgehäuse aus Kunststoff herstellen. Als Kunststoffe sind fast alle erdenklichen Thermo- und Duroplaste verwendbar. Gute Erfahrungen sind mit POM (Kurzzeichen für Polyoxymethylen; Polyformaldehyd, Polyacetate) als Gehäusematerial gemacht worden.

Den unten beschriebenen Mikromotor wird man zum Antrieb der Zeiger in Uhren sowie auch anderen Anzeigeeinheiten mit beweglichem Zeiger bzw. Zeigern einsetzen. Auch kann der Motor zum Ein- und Ausfahren von Antennen bei Handfunktelefonen (Handys) eingesetzt werden. Auch kann in einer analogen Ausführung aus dem Mikromotor ein Mikrogenerator werden.

### Kurze Beschreibung der Zeichnungen

Im Folgenden werden Beispiele des erfindungsgemässen Rotors für den erfindungsgemässen Mikromotor anhand der nachfolgenden Zeichnungen näher erläutert. Weitere Vorteile der Erfindung ergeben sich aus dem Beschreibungstext. Es zeigen:
- Fig. 1: eine perspektivische Darstellung des erfindungsgemässen Rotors mit einem eingeklebten Dauermagneten,
- Fig. 2: eine Seitenansicht des in **Figur 1** dargestellten Rotors,
- Fig.3: einen Längsschnitt des in **Figur 2** dargestellten Rotors entlang der dortigen Linie III - III,
- Fig. 4: einen Querschnitt des in **Figur 2** dargestellten Rotors entlang der dortigen Linie IV - IV,
- Fig. 5: eine perspektivische Darstellung einer Variante des in Figur 1 dargestellten Rotors mit nicht eingeklebten, sondern mit eingeschnapptem, eingepresstem Dauermagneten,
- Fig. 6: eine Seitenansicht des in **Figur 5** dargestellten Rotors,
- Fig.7: einen Längsschnitt des in **Figur 5** dargestellten Rotors entlang der dortigen Linie VII - VII,
- Fig. 8: einen Querschnitt des in **Figur 5** dargestellten Rotors entlang der dortigen Linie VIII - VIII,
- Fig. 9: eine schematische Darstellung der Dehnung eines Kunststoffes in Prozent über einem logarithmischen Zeitmassstab in Stunden,
- Fig. 10: eine schematische Grössenordnungsdarstellung von mikrotechnischen Systemen im Vergleich zu anderen, kleineren und grösseren mechanischen Grössenordnungssystemen,
- Fig. 11: einen Querschnitt entlang der Linie XI - XI in **Figur 12** durch einen als Schrittmotor ausgebildeten Mikromotor mit einem in den **Figuren 5** bis **8** dargestellten Rotor,
- Fig. 12: eine Draufsicht auf den in **Figur 11** im Querschnitt dargestellten Mikromotor, wobei hier die Lager für die Wellenstummel des Rotors entfernt sind und
- Fig. 13: eine perspektivische Darstellung des in **Figur 12** gezeigten Mikromotors ebenfalls ohne Lager.

### Wege zur Ausführung der Erfindung

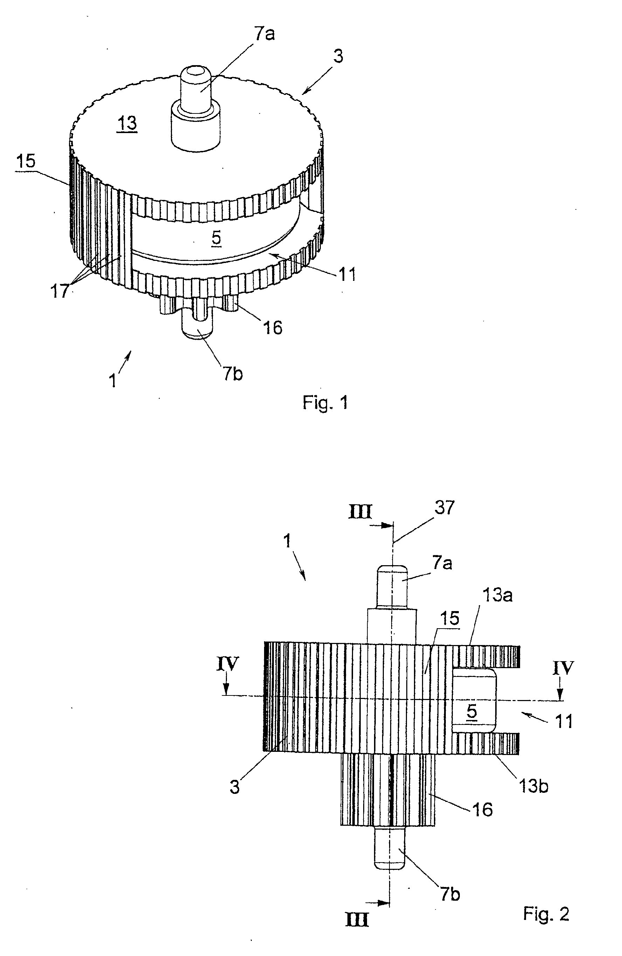

Der in den **Figuren 1** bis **4** dargestellte erfindungungsmässe Rotor **1** ist Teil eies erfindungsgemässen elektromagnetischen Mikromotors. Der Rotor **1** hat ein Rotorgehäuse **3**, welches einen Dauermagneten **5** aufnimmt, wobei dieser wenigstens teilweise vom Rotorgehäuse **3** umgeben ist. An dem Rotorgehäuse **3** sind zwei miteinander fluchtende Wellenstummel **7a** und **7b** angeordnet. Das Rotorgehäuse **3** hat einen zwischen den beiden Wellenstummeln **7a** und **7b** liegenden freien Innenraum **9**, in den der Dauermagnet **5** durch eine seitliche Einschieböffnung **11** im Rotorgehäuse **3** einschiebbar ist. Der Innenraum **9** ist zusammen mit der Einschieböffnung **11** derart ausgebildet, dass die Bereiche der Oberfläche **10** des Dauermagneten **5** von der Innenwand **12** des Innenraums **9** grösstenteils bedeckt sind. Unter einem grösstenteils bedecktem Dauermagneten wird eine etwa 90%-ige Bedeckung der Gesamtfläche und mehr als die Hälfte (50%) einer einzigen separaten Fläche, hier der Mantelfläche, verstanden.

Der Dauermagnet hat gegenüber den üblichen verwendeten Dauermagneten bei Mirkromotoren keine Durchgangsbohrung, er ist als massive Scheibe **5** ausgebildet. Der Dauermagnet **5** kann aus unterschiedlichen permanent magnetisierbaren Materialien und Legierungen bestehen. Man kann beispielsweise einen gesinterten Dauermagneten aus Samarium-Kobalt (SmCo₅) verwenden.

Die Aussenkontur des Rotorgehäuses **3** ist kreiszylindrisch mit zueinander parallelen Stirnflächen **13a** und **13b** ausgebildet. Die Wellenstummel **7a** und **7b** liegen zentrisch und senkrecht in jeder der Stirnflächen **13a** und **13b**. Zwischen den beiden Stirnflächen verläuft ein kreiszylindrischer Mantel **15**, der die Einschieböffnung **11** aufweist.

Die Dimensionen der Einschieböffnung sind derart gewählt, dass der Dauermagnet **5** ohne wesentliche Dehnung des Rotorgehäuses **3** einschiebbar ist. Der Dauermagnet **5** wird im Innenraum **9** eingeklebt, damit sein Drehmoment auf das Rotorgehäuse **3** übertragen wird.

Der Wellenstummel **7b** trägt ein Zahnrad **16** zur Übertragung der Drehbewegung auf andere Elemente, wie beispielsweise ein Getriebe, welches dann, wenn der Motor in einer Uhr eingesetzt wird, die Zeigerbewegung vornimmt.

Das Rotorgehäuse besteht aus POM, mit einer gut sichtbaren Farbe eingefärbt, und weist zur Erhöhung der Handhabbarkeit eine Riffelung 17 auf. Die Wellenstummel **7a** und **7b** sowie das Zahnrad **16** sind Teil des Rotorgehäuses **3**. Alles ist in einem Kunststoffspritzvorgang hergestellt worden.

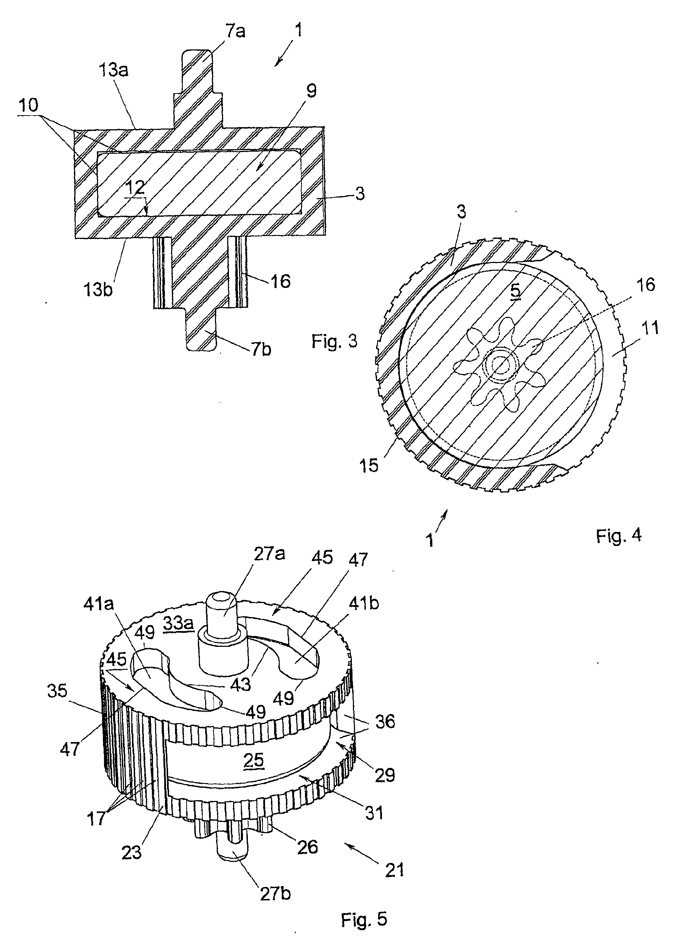

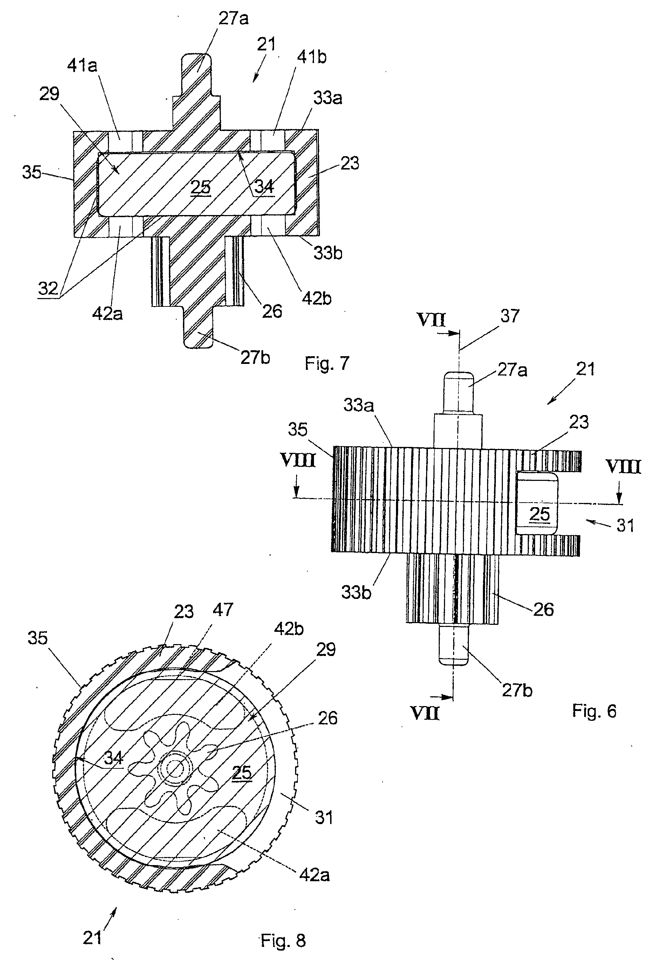

Statt den Dauermagneten **5** im Innenraum **9** des Rotorgehäuses **3** einzukleben, kann er auch einschnappend eingepresst werden. Ein Rotor **21** mit einem Rotorgehäuse **32**, welches einen nicht eingeklebten Dauermagneten **25** aufnehmen kann, ist in den **Figuren 5** bis **8** gezeigt. Der Dauermagnet **25** ist identisch mit dem Dauermagneten **5**. Das Rotorgehäuse **23** hat analog zum Rotorgehäuse **3** analog angeordnete Wellenstummel **27a** und **27b**, wobei der Wellenstummel **27b** ein Zahnrad **26** ebenfalls zur Übertragung der Drehbewegung auf andere Elemente aufweist. Auch hier sind die Wellenstummel **27a** und **27b** zentrisch und senkrecht auf zwei zueinander parallel verlaufenden kreisförmigen Stirnfächen **33a** und **33b** angeordnet. Die Bereiche der Oberfläche des Dauermagneten sind von der Innenwand des Innenraums grösstenteils bedeckt. Für die Bedeckung gelten die oben angeführten Kriterien. Der Mantel **35** des Rotorgehäuses **23** verläuft auch hier koaxial zur geometrischen Drehachse **37**, welche die geometrische Achse der Wellenstummel **27a** und **27b** ist. Die Wellenstummel **27a** und **27b** sowie das Zahnrad **26** sind auch hier Teil des Rotorgehäuses **23**. Alles ist in einem Kunststoffspritzvorgang hergestellt worden.

Da der Dauermagnet **25** jetzt ohne Verkleben in einem Innenraum **29** des Rotorgehäuses **23** derart festgehalten ist, dass er auch durch Stösse aus diesem nicht herausfallen kann, und eine einwandfreie Drehmomentübertragung auf das Rotorgehäuse **23** gegeben ist, sind die Abmessungen des Innenraum **29** um eine Toleranz kleiner als diejenigen für den Dauermagneten **5**. Hier ist eine Einschieböffnung **31** im Aussenmantel **35** des Rotorgehäuses **23** derart ausgebildet, dass sich ihr Rand **36** beim Durchschieben des Dauermagneten **25** dehnt.

Die Dehnung des Rands **36** der Einschieböffnung **31** erfolgt kurzzeitig. D.h. es darf, wie eingangs erwähnt, beim Einschieben des Dauermagneten **25** die Materialstreckgrenze **SG** (**Figur 9**) im benachbarten Bereich der Einschieböffnung **31** nicht überschritten werden. Würde die Streckgrenze SG überschritten, würde eine nicht gewünschte und auch nicht tolerierbare bleibende Verformung, d.h. Aufweitung des Querschnitts der Einschieböffnung **31** erfolgen. Um eine gutes "Einschnappen" zu erhalten, wird eine grosse Umschliessung des Dauermagneten **25** durch die Rotorgehäusewand benötigt. Dies bedingt allerdings einen im Verhältnis zum Dauermagnetquerschnitt kleinen Querschnitt der Einschieböffnung, der ja, wie gerade oben ausgeführt, durch den Wert der Materialstreckgrenze **SG** nicht beliebig wählbar ist.

Die Lösung dieser schier ausweglosen Forderung wird dadurch erreicht, dass der Dehnungsweg des benachbarten Bereiches um die Einschieböffnung herum vergrössert wird. Steht ein grösserer Dilatationsweg zur Verfügung, wird die Streckgrenze SG nicht erreicht.

Dieser grössere Dilatationsweg wird dadurch erreicht, dass in den Stirnflächen **33a** und **33b** wenigstens eine Ausgleichsöffnung benachbart zur Einschieböffnung **31** vorhanden ist. In dem hier gewählten Beispiel sind in jeder Stirnfläche 33a und **33** je zwei Ausgleichsöffnungen **41a** und **41b** sowie **42a** und **42b** vorhanden. Die beiden Ausgleichsöffnungen **41a/b** und **42a/b** als Durchgangsöffnungen in je einer Stirnseite **33a** und **33b** sind einander gegenüberliegend symmetrisch zu einer Symmetrieebene angeordnet, welche die geometrische Drehachse 37 beinhaltet und durch die Mitte der Einschieböffnung 31 geht. Vereinfacht ausgedrückt, haben die Ausgleichsöffnungen **41a/b** und **42a/b** eine "wurstartige" Kontur. Die der Drehachse **37** benachbarte Kontur **43** ist koaxial ausgebildet, während die dem Mantel **35** benachbarte Kontur **45** eine gerades Mittelstück **47** aufweist. Die Konturen **43** und **45** sind über ein gerundetes Kurvenstück **49** miteinander verbunden. Die Innenseiten der Ausgleichsöffnungen **41a/b** und **42a/b** verlaufen senkrecht zu den jeweiligen Stirnflächen **33a** bzw. **33b**. Jeweils eines der gerundeten Kurvenstücke **49** kommt oberhalb der Einschieböffnung **31** zu liegen.

Die genaue Lage und die genauen Abmessungen der Ausgleichsöffnungen **41a/b** und **42a/b** richten sich nach dem Querschnitt der Einschieböffnung **31,** dem Querschnitt des Dauermagneten **25** und den Materialkonstanten des verwendeten Gehäusematerials.

Der Querschnitt des Innenraums **29** ist um eine Presstoleranz kleiner gewählt als der Querschnitt des Dauermagnets **25**. Bei den Abmessungen ist darauf geachtet, dass in keinem Fall die Fliessgrenzdehnung überschritten wird. Würde diese Grenze überschritten, würde eine Schädigung des Materials durch Mikrorisse, sogenannte Crazes, stattfinden.

Die Darstellung in den **Figuren 5** bis **8** ist in ihren Abmessungen getreu wiedergegeben und zeigt einen Rotor mit einem Durchmesser von 1,6 mm. Als Rotorgehäusematerial wird POM mit einer Streckspannung von 65 MPa, einer Streckdehnung von 7%, einer Fliessgrenzdehnung von 2,5%, einem E-Modul von 3'000 MPa, einem Kriechmodul für 1 Stunde von 2'500 MPa, einem Kriechmodul für 1'000 Stunden von 1'300 MPa, einem Schub-Modul von 894 MPa, einer Poissonzahl von 0,35 und einer Dichte von 1,41 g/cm³ verwendet. Auf den Dauermagneten soll ein Radialdruck von 16 N/mm² wirken. Für den in den **Figuren 5** bis **8** dargestellten Rotor **21** ergibt sich dann eine Pressspannung von 59 MPa, eine Pressdehnung von 1,8%, eine Pressverformung von 0,016 mm, eine "Schnappspannung" von 65 MPa und eine Schnappdehnung von 0,025 mm.

Wird beispielsweise die Kontur **43** durch ein zum Mittelstück **47** paralleles Kurvenstück als Tangente an die Kurve **43** ersetzt, so ergeben sich die nachfolgenden Werte: Eine Pressspannung von 60 MPa, eine Pressdehnung von 1,8%, eine Pressverformung von 0,014 mm, eine "Schnappspannung" von 96 MPa und eine Schnappdehnung von 0,025 mm. Mit einer "Schnappspannung" von 96 MPa wird die zulässige Streckspannung von 65 MPa überschritten. Diese Kontur einer Ausgleichsöffnung kann bei diesem Material und bei diesen Wandstärken nicht verwendet werden.

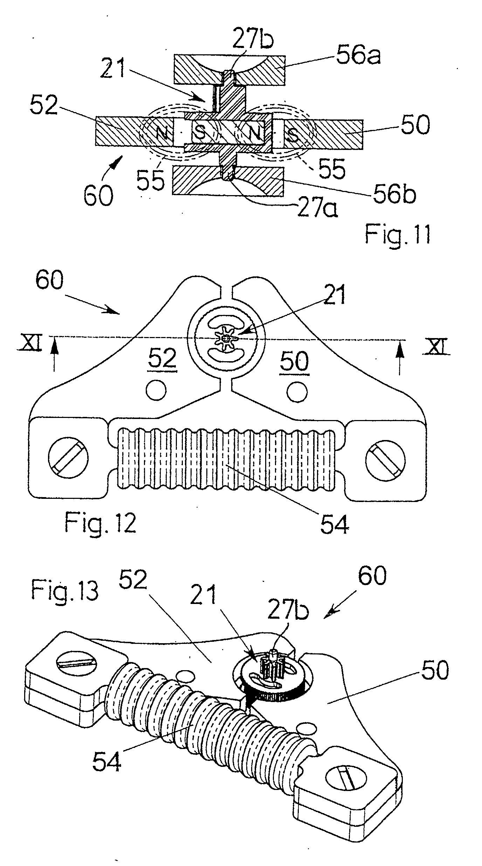

Ein beispielsweiser Schrittmotor **60** als Mikromotor mit dem in den **Figuren 5** bis **8** dargestellten Rotor **21** zeigen die **Figuren 10** bis **12**, wobei hier der Rotor **21** gegenüber den Darstellungen in den **Figuren 5** bis **8** um 180° geschwenkt eingebaut ist. Der Schrittmotor **60** hat zwei Statoren **50** und **52** sowie eine Spule **54** zur Erzeugung des notwendigen Magnetfeldes **55**, welches in **Figur 10** eingezeichnet ist. Die beiden Wellenstummel **27a** und **27b** des Rotors **21** sind in je einem Lager **56a** bzw. **56b** gelagert.

## Patentansprüche

1. Elektromagnetischer Mikromotor **(60)** mit einem Rotor **(1; 21)**, der einen in einem zwei miteinander fluchtende Wellenstummel **(7a, 7b; 25a, 27b)** aufweisenden Rotorgehäuse **(3; 23)** liegenden Dauermagneten **(5; 25)** hat, **dadurch gekennzeichnet, dass** das Rotorgehäuse **(3; 23)** einen zwischen den Wellenstummeln **(7a, 7b; 25a, 27b)** liegenden freien Innenraum **(9; 29)** hat, in den der Dauermagnet **(5; 25)** nach einer Herstellung des Rotorgehäuses **(3; 23)** einbringbar ist, wobei jede Oberseite **(10; 32)** des Dauermagneten **(5; 25)** von jeweils einer Innenwandseite **(12; 34)** des Innenraums **(9; 29)** wenigstens grösstenteils bedeckt ist.

2. Rotor **(1; 21)** für einen elektromagnetischen Mikromotor **(60)** mit einem zwei miteinander fluchtende Wellenstummel **(7a, 7b; 27a, 27b)** aufweisenden Rotorgehäuse **(3; 23)** und einem vom Rotorgehäuse **(3; 23)** wenigstens teilweise umgebenen Dauermagneten **(5; 25)**, **dadurch gekennzeichnet, dass** das Rotorgehäuse **(5; 25)** einen zwischen den Wellenstummeln **(7a, 7b; 27a, 27b)** liegenden freien Innenraum **(9; 29)** hat, in den der Dauermagnet **(5; 25)** nach einer Herstellung des Rotorgehäuses **(3; 23)** einbringbar ist, wobei jede Oberseite **(10; 32)** des Dauermagneten **(5; 25)** von jeweils einer Innenwandseite **(12; 34)** des Innenraums **(9; 29)** wenigstens grösstenteils bedeckt ist.

3. Rotor **(1; 21)** nach Anspruch 2, **dadurch gekennzeichnet, dass** der Dauermagnet **(5; 25)** ein massives Teil ohne Durchgangsbohrung ist und aus gesintertem Material besteht.

4. Rotor **(1; 21)** nach Anspruch 2 oder 3, **dadurch gekennzeichnet, dass** das Rotorgehäuse **(3; 23)** eine seitliche, vorzugsweise im Rotormantel **(15; 35)** angeordnete, Einschieböffnung **(11; 31)** hat, durch die der Dauermagnet **(5; 25)** in den Innenraum **(9; 29)** einschiebbar ist.

5. Rotor **(1; 21)** nach einem der Ansprüche 2 bis 4, **dadurch gekennzeichnet, dass** die Aussenkontur des Rotorgehäuses **(3; 23)** kreiszylindrisch mit zueinander parallelen Stirnflächen **(13a, 13b; 33a, 33b)** ausgebildet ist und die Wellenstummel **(7a, 7b; 27a, 27b)** zentrisch in jeder Stirnfläche **(13a, 13b; 33a, 33b)** des Rotorgehäuses **(3; 23)** liegen.

6. Rotor **(1; 21)** nach einem der Ansprüche 1 bis 5, **dadurch gekennzeichet, dass** die Abmessungen der Einschieböffnung **(11; 31)** um eine Toleranz kleiner als der Querschnitt des Dauermagneten **(5; 25)** sind und die Toleranz derart gewählt ist, dass die Streckgrenze des Gehäusematerials nicht überschritten wird.

7. Rotor **(21)** nach Anspruch 4, **gekennzeichnet durch** wenigstens eine eine Rotorgehäusewand **(33a, 33b)** durchdringende Ausgleichsöffnung **(41a, 41 b, 42a, 42b)** benachbart zur Einschieböffnung **(31)**, damit um die Einschieböffnung **(31)** herum die Materialdehnungslänge vergrössert wird, um den Dauermagneten **(25)** im Innenraum **(29)** einschnappend formschlüssig zu halten, wobei vorzugsweise zwei, insbesondere in den Stirnseiten **(33a, 33b)** liegende, Ausgleichsöffnungen **(41a, 41 b, 42a, 42b)** vorhanden sind.

8. Rotor **(1; 21)** nach einem der Ansprüche 2 bis 7, **dadurch gekennzeichnet, dass** die Abmessungen des Innenraums **(9; 29)** wenigstens in einer Dimension um eine Toleranz kleiner sind als die betreffende Aussendimensionen des Dauermagneten **(5; 25)**, wobei die Toleranz derart gewählt ist, dass eine kraftschlüssige Verbindung zwischen Rotorgehäuse **(3; 23)** und Dauermagneten **(5; 25)** gegeben ist, aber die Streckgrenze **(SG)** nicht kurzfristig (während der Montage) und die Fliessgrenzdehnung **(FD)** nicht langfristig überschritten wird.

9. Rotor **(1; 21)** nach einem der Ansprüche 2 bis 8, **dadurch gekennzeichnet, dass** einer der Wellenstummel **(7b; 27b)** ein Zahnrad **(16; 26)** trägt und vorzugsweise der Mantel **(15; 35)** des Rotorgehäuses **(3; 23)** eine Riffelung **(17)** zur Erhöhung der Griffigkeit hat.

10. Rotor **(1; 21)** nach einem der Ansprüche 2 bis 9, **dadurch gekennzeichnet, dass** das Rotorgehäuse **(3; 23)** aus Kunststoff, vorzugsweise aus POM, besteht, und insbesondere eingefärbt ist, damit es bei seiner Kleinheit auch nach längeren Montagearbeiten vom Arbeiter gut erkennbar bleibt.
